(19) Europäisches Patentamt / European Patent Office / Office européen des brevets

(11) **EP 3 639 041 B1**

(12) **FASCICULE DE BREVET EUROPEEN**

(45) Date de publication et mention de la délivrance du brevet:
**16.03.2022 Bulletin 2022/11**

(21) Numéro de dépôt: **18748964.6**

(22) Date de dépôt: **13.06.2018**

(51) Classification Internationale des Brevets (IPC):
**G01P 3/489** (2006.01)     **G01P 3/488** (2006.01)

(52) Classification Coopérative des Brevets (CPC):
**G01P 3/489; G01P 3/488**

(86) Numéro de dépôt international:
**PCT/FR2018/051393**

(87) Numéro de publication internationale:
**WO 2018/229433 (20.12.2018 Gazette 2018/51)**

(54) **PROCÉDÉ DE MESURE DE VITESSE DE ROTATION D'UN ARBRE DE MOTEUR D'AÉRONEF TENANT COMPTE DU BRUIT DE MESURE**

VERFAHREN ZUR MESSUNG DER DREHZAHL EINER FLUGZEUGMOTORWELLE UNTER BERÜCKSICHTIGUNG DES MESSRAUSCHENS

METHOD FOR MEASURING THE SPEED OF ROTATION OF AN AIRCRAFT ENGINE SHAFT, TAKING INTO ACCOUNT THE MEASUREMENT NOISE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.06.2017 FR 1755343**

(43) Date de publication de la demande:
**22.04.2020 Bulletin 2020/17**

(73) Titulaire: **Safran Aircraft Engines**
**75015 Paris (FR)**

(72) Inventeurs:
• **DJELASSI, Cedrik**
  **77550 Moissy-Cramayel Cedex (FR)**
• **GAUVRIT, Jacques Paul Michel**
  **77550 Moissy-Cramayel (FR)**
• **SCHIELIN, Jean-François Jean-Paul Clément**
  **77550 Moissy-Cramayel (FR)**

(74) Mandataire: **Regimbeau**
**20, rue de Chazelles**
**75847 Paris Cedex 17 (FR)**

(56) Documents cités:
**US-A- 5 128 973      US-A1- 2003 208 329**
**US-A1- 2007 108 969      US-A1- 2016 291 052**

**Description**

**DOMAINE TECHNIQUE DE L'INVENTION**

La présente invention concerne la mesure précise de régime d'un moteur d'aéronef.

Il s'agit plus spécifiquement de tenir compte de l'existence de bruits parasites venant s'ajouter de manière imprévisible au signal utile, lors de la mesure de la vitesse de rotation d'un arbre de moteur par capteur à roue phonique.

**PRESENTATION GENERALE DE L'INVENTION**

Une détection précise de la vitesse de rotation d'un arbre de moteur d'aéronef est nécessaire, dans la mesure où cette information peut commander la coupure ou la régulation de l'alimentation du moteur, par exemple si la vitesse de rotation ou l'accélération dépassent une valeur de sécurité prédéterminée.

Il est bien connu de mesurer la vitesse de rotation d'un arbre à l'aide d'un capteur à reluctance variable associé à une roue phonique. On peut parler invariablement de capteur à roue phonique, ou de capteur à réluctance variable. La roue phonique est agencée de manière à être solidaire de l'arbre. Le capteur crée, à l'aide d'un bobinage, un champ magnétique qui se referme soit dans l'air à l'espace entre deux dents de la roue phonique, soit sur une dent de la roue phonique. Ainsi, le flux magnétique mesuré varie en fonction du passage des dents de la roue phonique, de manière proportionnelle à la vitesse de rotation de la roue phonique. La fréquence de la tension alternative ainsi générée est égale à la fréquence de passage des dents de la roue phonique, elle-même illustrative de la vitesse de rotation de l'arbre, et l'amplitude de cette tension alternative est fonction de l'entrefer et de la fréquence du signal. La Déposante a décrit, dans la demande de brevet français publiée sous le numéro WO 2014/207369, un écrou denté pouvant être vissé autour d'un arbre de moteur d'aéronef, par exemple pour solidariser mécaniquement cet arbre avec un roulement à bille, dont les dents peuvent coopérer avec un capteur de vitesse de rotation fonctionnant par ce principe. Au moins une partie des dents de l'écrou comportent en outre des évidements, préservant la fonction de serrage de l'écrou tout en fournissant un plus grand nombre d'intervalles de déficit dans la pièce pour permettre une mesure précise de vitesse de rotation de l'arbre.

Des systèmes de mesure de vitesse de rotation à roue phonique peuvent notamment être utilisés pour mesurer le régime dit « N1 » de rotation du corps basse pression d'un turboréacteur à double corps. Sur des moteurs « direct drive » (entraînement direct de la soufflante par l'arbre basse pression), ce régime N1 est aussi le régime de la soufflante. Un capteur à roue phonique peut également permettre de mesurer le régime N2 de rotation du corps haute pression du turboréacteur double corps, ou la vitesse de rotation d'un autre élément tournant du moteur.

Le signal sinusoïdal alternatif acquis aux bornes d'un capteur à reluctance variable peut être transformé, par un circuit électronique placé en amont du calculateur moteur, en signal créneau sur lequel le calculateur moteur peut réaliser une mesure de fréquence. La transformation du signal sinusoïdal en signal créneau est notamment réalisée par un trigger de Schmidt, avec un seuil de redémarrage et un seuil de réarmement prédéterminés. Le signal créneau en sortie de trigger de Schmidt commute vers une valeur haute lorsque la tension d'entrée dépasse le seuil de réarmement, et commute vers une valeur basse lorsque la tension d'entrée passe en-deçà du seuil de redémarrage.

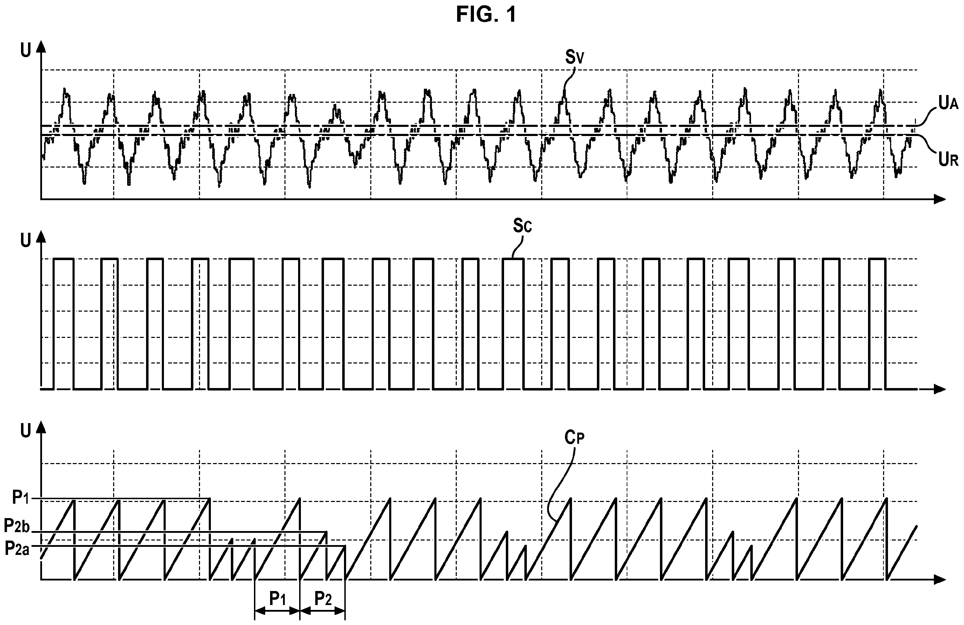

Or, le signal créneau obtenu pour un capteur de régime à roue phonique peut être très perturbé à cause de bruits parasites. Des parties du capteur peuvent subir des perturbations électromagnétiques, dues à des vibrations mécaniques de certaines parties de moteur. On peut observer des événements ponctuels de bruit, mais également des signaux de bruit du type alternatif se superposant au signal représentatif de la rotation de la roue phonique (signal utile). A ce titre, la **figure 1** illustre, sur un premier axe, la tension Sv aux bornes du capteur à roue phonique au cours du temps, dans le cas d'un signal altéré par un bruit parasite de type alternatif de fréquence supérieure à celle du signal utile, et illustre, sur un deuxième axe, le signal créneau Sc obtenu après crénelage du signal de tension Sv, en sortie de trigger. L'amplitude pic à pic du bruit pouvant être localement supérieure à la différence de tension entre le seuil de redémarrage $U_R$ et le seuil de réarmement $U_A$, le bruit alternatif peut provoquer des commutations parasites du signal créneau. Un troisième axe illustre les variations d'un signal $C_P$ de comptage des périodes successives du signal créneau $S_c$ au fil du temps. La temporisation illustrée par la courbe de ce troisième axe est relancée à chaque commutation descendante du signal créneau, du niveau haut vers le niveau bas. Par exemple, au cours de la période $P_1$ illustrée sur la figure, il ne se produit pas de commutation parasite due au bruit. En revanche, sur la période suivante $P_2$, le signal Sv détecté franchit le seuil de réarmement $U_A$, puis redescend en-deçà du seuil de redémarrage $U_R$, du fait du bruit alternatif parasite superposé au signal utile. La durée écoulée entre ces deux passages de seuils de trigger est bien inférieure à la période $P_1$, ce qui provoque des commutations rapides successives du signal créneau Sc, et la détection, en lieu et place d'une unique période « complète » $P_2$ qui aurait été obtenue sans commutation parasite, de deux périodes successives $P_{2a}$ et $P_{2b}$ « morcelées » du signal créneau Sc. La mesure de vitesse de rotation de l'arbre est alors perturbée.

Une solution connue consiste à filtrer le bruit parasite en amont de l'électronique qui produit le signal crénelé. Il s'agit d'une solution bas niveau, mise en œuvre en amont du calculateur moteur. Il est par exemple fréquent de filtrer, par un filtrage passe-bas, les bruits dont la fréquence est supérieure à celle du signal utile. Cependant, le filtrage passe-bas est susceptible de déphaser la mesure obtenue. Une mesure déphasée peut s'avérer gênante pour d'autres fonctions que peut remplir le signal acquis aux bornes du capteur à reluctance variable, par exemple une fonction d'équilibrage moteur, si la position de l'arbre est prise comme référence pour le contrôle d'autres éléments du moteur. De plus, le filtrage passe-bas peut réduire l'amplitude du signal. A seuils de redémarrage et de réarmement constants et à amplitude réduite du signal de mesure de vitesse de rotation, la précision de la mesure de fréquence obtenue est réduite. Ce problème est d'autant plus pertinent en bas régime moteur (par exemple au démarrage du moteur), où le rapport de l'amplitude pic à pic d'un bruit parasite de type alternatif sur l'amplitude pic à pic du signal utile peut être plus important que pour un régime moteur plus élevé.

Par ailleurs, il existe des solutions software, mises en œuvre au niveau de le système applicatif de l'interface numérique du moteur (par exemple, un système de type FADEC), réalisant un post-traitement de la tension sinusoïdale acquise aux bornes d'un capteur à reluctance variable. Cependant, aucune des solutions existantes n'est précisément adaptée à la problématique de traitement d'un signal bruité par un bruit alternatif de haute fréquence.

Notamment, des solutions de l'art antérieur qui reposent sur un simple moyennage de mesures de période acquises à des temps antérieurs, pour déterminer la période du passage des dents de la roue phonique au temps courant, ne peuvent être efficaces qu'à condition d'acquérir un nombre suffisant de périodes « complètes » non bruitées.

## PRESENTATION GENERALE DE L'INVENTION

La présente invention résout les problèmes mentionnés ci-avant par un post-traitement des valeurs de période détectées sur le signal crénelé, ce traitement pouvant être implémenté au niveau de l'applicatif software de l'interface numérique du moteur, pour restituer la « période utile » (c'est-à-dire la période du signal utile qui serait obtenu sans bruit parasite) à partir d'un ensemble d'échantillons de périodes du signal crénelé enregistrés dans une mémoire de type buffer circulaire. Ce post-traitement repose sur l'observation qu'en présence de commutations parasites telles que celles mises en exergue sur le signal Sc de la figure 1 présentée ci-avant, on peut obtenir, en réalisant la somme de plusieurs périodes consécutives du signal Sc, une valeur très proche de celle de la période qui serait observée pour le signal utile. Le procédé de l'invention permet de retrouver les bonnes sommes à effectuer, en réalisant une pluralité de sommes d'échantillons de période consécutifs et en comparant ces sommes à des seuils de vraisemblance, calculés en fonction des mesures de période et de régime réalisées précédemment.

L'invention vise, selon un premier aspect, un procédé de mesure de vitesse de rotation d'un arbre d'un moteur selon la revendication 1.

Le procédé de l'invention ne nécessite pas de disposer d'échantillons de période correspondant à des périodes complètes du signal utile. Même si l'on dispose seulement d'échantillons de périodes « morcelées » du fait de commutations parasites obtenues sur le signal créneau, le procédé de l'invention est en mesure de retrouver une période proche de celle qui serait obtenue pour le signal utile.

Le procédé de l'invention a été développé en partant de l'observation qu'en présence de commutations parasites telles que celles mises en exergue sur le signal $S_c$ de la figure 1 présentée ci-avant, on peut obtenir, en réalisant la somme de plusieurs périodes consécutives du signal Sc, une valeur très proche de celle de la période qui serait observée pour le signal utile.

De manière avantageuse, ce procédé peut présenter les caractéristiques supplémentaires suivantes :

- le procédé comprend une étape supplémentaire de détermination, parmi la pluralité de sommes d'échantillons calculées, de sommes valides d'échantillons qui sont comprises entre les bornes inférieure et supérieure de période, le calcul de la période utile du signal créneau étant réalisé en calculant la moyenne de l'ensemble constitué des échantillons valides de période et des sommes valides d'échantillons ;

- si la somme du nombre d'échantillons valides et du nombre de sommes valides d'échantillons est inférieure à un deuxième seuil, la période utile du signal créneau est prise égale à une période utile du signal créneau obtenue lors d'une itération précédente du procédé ;

- les bornes inférieure et supérieure de période sont calculées à partir d'une valeur de période consolidée, et d'une valeur de variation maximale de période ;

- la période consolidée est alors prise égale à une période utile de signal créneau obtenue à un instant antérieur ;

- la valeur de variation maximale de période est alors obtenue à l'aide d'une loi de gradient maximal de vitesse de rotation, où le gradient maximal à un instant donné est fonction de la vitesse de rotation ;

- durant une phase d'initialisation de la mesure, phase pendant laquelle le nombre d'échantillons valides de période ne dépasse pas un troisième seuil, ou alors pendant laquelle les échantillons de période détectés sur le signal créneau sont dispersés entre eux au-delà d'un pourcentage seuil prédéterminé, une période utile du signal créneau est estimée par un modèle numérique théorique du régime ;

• la période utile du signal créneau est alors déterminée pendant la phase d'initialisation par un modèle numérique du régime en fonction de paramètres thermodynamiques du moteur, de préférence la valeur du régime de corps haute pression, la pression atmosphérique, le calage stator du compresseur.

Selon un deuxième aspect, l'invention concerne un calculateur de moteur de turbomachine configuré pour mettre en œuvre les étapes du procédé décrit ci-avant.

L'invention concerne enfin selon un troisième aspect un produit programme d'ordinateur, destiné à être utilisé dans un système applicatif d'un calculateur de moteur de turbomachine, dont des instructions de code permettent la mise en œuvre d'un procédé comme ci-avant.

## PRESENTATION GENERALE DES FIGURES

La **figure 1** a déjà été décrite ci-avant.
D'autres caractéristiques, buts et avantages de l'invention ressortiront de la description qui suit, qui est purement illustrative et non limitative, accompagnée des dessins annexés supplémentaires suivants :

La **figure 2** illustre, sur un exemple de signal bruité en sortie de capteur à roue phonique, des détections erronées de période de signal créneau.

La **figure 3** représente un signal de tension théorique résultant de la superposition d'un signal utile et d'un bruit de type alternatif sinusoïdal, pour illustrer le principe de l'addition d'échantillons de période.

La **figure 4** représente de manière schématique un mode de réalisation d'un algorithme de traitement d'échantillons de période acquis dans une mémoire circulaire pour recalculer la période utile.

La **figure 5** représente un mode de réalisation d'un algorithme de détermination d'intervalle de vraisemblance au sein de l'algorithme de la figure 4.

La **figure 6** illustre les résultats obtenus, avec l'algorithme illustré en figure 4, sur un signal de vitesse de rotation d'arbre, à partir d'une phase d'initialisation de la mesure et sur une durée comprenant une plage temporelle restreinte Z.

La **figure 7** représente à échelle de temps plus réduite, sur la plage Z, les signaux de la figure 6.

## DESCRIPTION DETAILLEE DE MODES DE REALISATION

Dans toute la description ci-après, on acquiert un signal Sv alternatif aux bornes d'un capteur à roue phonique, de détection de vitesse de rotation de l'arbre du corps basse pression (BP) d'un turboréacteur double corps. En aval du capteur, et en amont d'un Electronic Engine Controller (EEC) tel qu'un FADEC3, le signal Sv est transformé en un signal créneau Sc. Pour ce faire, le signal Sv est ici filtré par un filtre RC, puis écrêté, puis à nouveau filtré, et enfin crénelé par un trigger de Schmidt de seuil de redémarrage $U_R$ à 0 V et de seuil de réarmement $U_A$ à 0.232 V.

Des périodes de passage de dents de roue phonique sont mesurées sur le signal créneau Sc, en considérant les durées écoulées entre deux fronts descendants du signal créneau. Le capteur à roue phonique mesure ici le régime N1 d'un moteur. Toutefois, les mêmes modalités de traitement peuvent tout aussi avantageusement être utilisées pour la mesure de tout autre régime d'élément tournant du moteur, comme par exemple pour la mesure du régime N2.

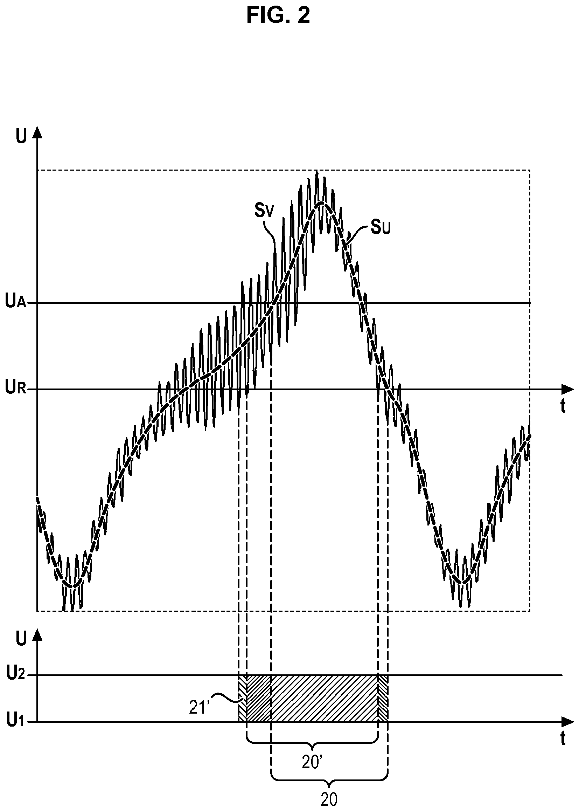

Or, comme vu ci-avant en relation à la figure 1, le signal créneau Sc peut présenter des commutations qui ne correspondent pas à des fronts montants ou descendants pour la partie utile du signal de détection de régime, mais qui sont au contraire provoquées par une variation de tension d'un bruit alternatif parasite (partie non utile du signal). Ce phénomène est illustré en **figure 2**. Sur un premier axe, une tension théorique Sv aux bornes d'un capteur à roue phonique est représentée en fonction du temps t. On a aussi représenté sur le même axe la partie utile Su du signal, obtenue de manière théorique en soustrayant au signal Sv la contribution du bruit alternatif parasite. Sur un deuxième axe temporel, on a superposé un signal créneau associé au signal Sv, et un signal créneau associé au signal utile théorique Su, commutant entre un niveau bas $U_1$ et un niveau haut $U_2$. Il y a commutation de ces signaux créneaux vers le niveau haut $U_2$ lorsque la tension du signal Sv passe au-delà du seuil $U_A$, et commutation de ces signaux créneaux vers le niveau bas $U_1$ lorsque la tension du signal Sv passe en-deçà du seuil $U_R$.

On observe, sur le deuxième axe, que le signal bruité Sv donne après crénelage un front montant et un front descendant correspondant à la partie 20', puis un front montant et un front descendant correspondant à la partie 20', tandis que le signal utile Su donne après crénelage un seul front montant et un seul front descendant correspondant à la partie 20. En outre, les fronts montant et descendant de la partie 20' ne sont pas en correspondance avec les fronts montant et descendant de la partie 20. Ainsi, la détection de période (par exemple la période entre deux fronts descendants successifs de signal créneau) est erronée pour le signal bruité Sv, par rapport à la période obtenue pour le signal utile Su. Or, c'est la période du signal utile Su qui est représentative du régime N1 utile.

Dans tout ce qui va suivre, on décrit un procédé de traitement 10 appliqué à une pluralité de valeurs $T_1,...,T_n$ de période acquises sur le signal créneau Sc. Le procédé 10 est mis en œuvre par un algorithme implémenté dans le système applicatif du calculateur électronique de régulation du moteur (EEC). Il permet de reconstituer une période consolidée Pt à partir des valeurs $T_1,...,T_n$. Pour rappel, une période de signal créneau $S_c$ est ici obtenue entre deux fronts descendants consécutifs (du niveau de tension haut $U_2$ vers le niveau de tension bas $U_1$) de ce signal créneau. Il n'est pas nécessaire de supposer à l'avance que ces périodes sont « complètes », c'est-à-dire associées au signal utile théorique de détection de régime hors bruit parasite, ou « morcelées », c'est-à-dire calculées entre des commutations parasites de signal Sc liées au bruit. Le procédé 10 permet de reconstituer une t-ième période Pt réalisant une bonne approximation de la période du signal utile théorique Su. Le procédé 10 est ici mis en œuvre de manière numérique, au niveau du logiciel applicatif, ou système applicatif, de l'interface numérique EEC d'un moteur d'aéronef.

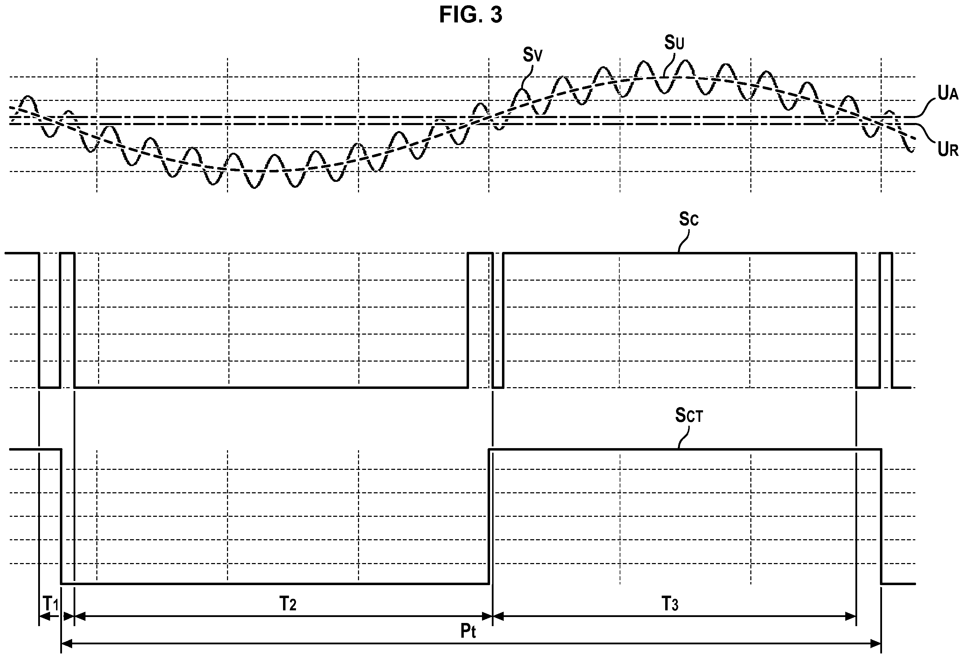

La **figure 3** permet d'éclairer, sur un exemple théorique simplifié, les objectifs et le principe du procédé 10. Sur un premier axe, on a représenté au cours du temps un exemple de signal de tension Sv, obtenu en sommant un signal utile théorique Su sinusoïdal de basse fréquence, également représenté sur ce premier axe, et un signal de bruit de plus haute fréquence. On a également représenté le seuil de redémarrage $U_R$ et le seuil de réarmement $U_A$ d'un trigger de Schmidt utilisé pour créneler le signal Sv et le signal théorique Su, ces derniers signaux correspondant respectivement au signal créneau Sc, représenté en parallèle sur un deuxième axe, et au signal créneau théorique $S_{CT}$, représenté en parallèle sur un troisième axe. On constate que la période Pt qui serait obtenue pour le signal $S_{CT}$ se superpose partiellement à une première période $T_1$ effectivement obtenue pour le signal Sc, puis se superpose complètement à deux périodes suivantes $T_2$ et $T_3$, puis se superpose partiellement à une quatrième période non référencée sur la figure 3.

Or, en additionnant les périodes consécutives $T_1$, $T_2$ et $T_3$, on obtient une valeur de période très proche de la valeur Pt, cette dernière constituant la période utile pour la mesure de fréquence. Une interprétation de ce résultat est que les deux fronts descendants de Sc marquant respectivement le début de la période $T_1$ et la fin de la période $T_3$ correspondent approximativement à des fronts descendants consécutifs qui seraient observés pour le signal $S_{CT}$, donnant la période Pt. Si l'on effectue une analogie entre cet exemple théorique et un cas réel de mesure de signal de détection acquis aux bornes d'un capteur à roue phonique, le signal effectivement observable aux bornes du capteur serait le signal Sv, donnant le signal créneau Sc. Un objectif du procédé 10 est alors d'obtenir une bonne approximation de la période Pt obtenue avec le signal créneau $S_{CT}$, la période Pt n'étant pas directement observable.

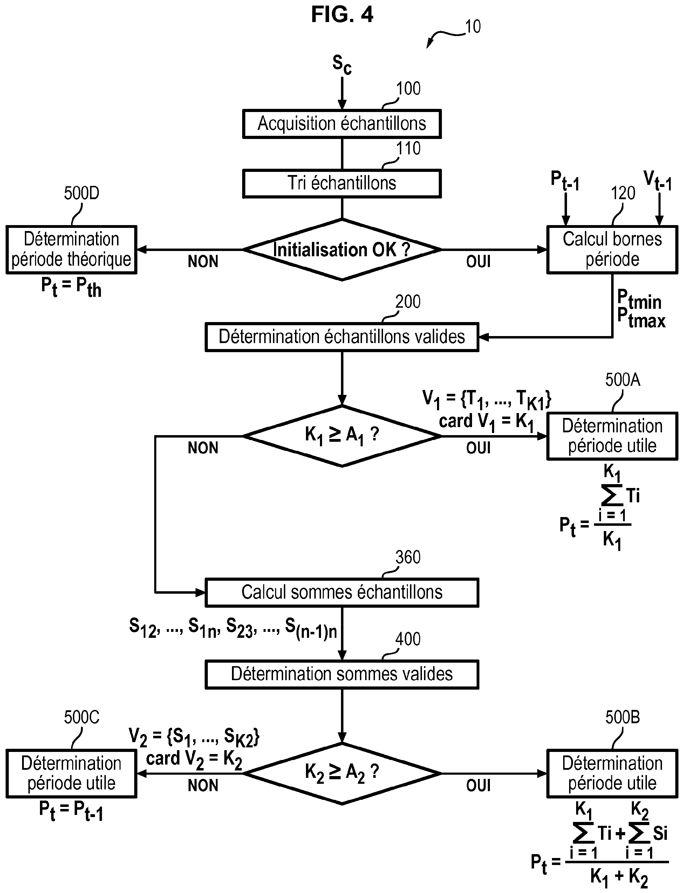

On décrit ci-après les étapes du procédé 10 de traitement de valeurs de période d'un signal créneau $S_c$ acquis à partir d'un signal Sv de détection de vitesse de rotation pris aux bornes d'un capteur à roue phonique, le procédé 10 étant ici, pour rappel, mis en œuvre par le logiciel applicatif, ou système applicatif, de l'interface numérique du calculateur électronique de régulation du moteur. Les étapes du procédé 10 sont ci-après décrites en relation à la **figure 4**.

A une étape 100, l'acquisition des valeurs $T_1,...,T_n$ d'échantillons de période de signal créneau s'effectue de la manière suivante. Un premier compteur détecte les fronts descendants d'un signal créneau d'échantillonnage de fréquence élevée par rapport à celle attendue pour le signal créneau. Par exemple, la carte de mesure des périodes de passage de dents de roue phonique peut avoir une période d'échantillonnage de l'ordre de $0.25.10^{-6}$ s. Un deuxième compteur détecte les fronts descendants du signal créneau $S_c$. Les valeurs de durée écoulée entre deux fronts descendants consécutifs du signal créneau $S_c$ peuvent ainsi être enregistrées dans une mémoire tournante B de type buffer circulaire, pouvant conserver en mémoire un certain nombre de mesures de période. Il est ici préférable d'implémenter le buffer B dans le circuit électronique de mesure de la période, au lieu d'une implémentation numérique dans le système applicatif de l'interface numérique du calculateur électronique du moteur, car la période de calcul de ce calculateur moteur est typiquement de l'ordre des 0.015 s et ne permet pas la mesure précise de la période de passage des dents de la roue phonique (dont la vitesse peut atteindre les 7000 tours par minute, à raison de 60 dents). Le buffer circulaire B peut ensuite fournir les valeurs $T_1,...,T_n$, ainsi que les dates de mesure de ces échantillons, au système applicatif.

Le nombre, ici noté n, d'échantillons est pris supérieur à un nombre minimal d'échantillons nécessaire pour assurer une bonne précision de la mesure. Le nombre minimal peut correspondre, par exemple, au nombre de dents de la roue phonique. En effectuant, à des étapes ultérieures reprises ci-après du procédé 10, une moyenne d'un nombre d'échantillons consécutifs supérieur au nombre de dents de la roue phonique, on gomme d'éventuelles disparités entre les mesures qui seraient liées à des inhomogénéités de géométrie des dents de roue phonique. La fréquence attendue des bruits parasites dont on cherche à réduire l'influence intervient également dans la détermination du nombre minimal d'échantillons du buffer B : plus le bruit est de haute fréquence par rapport au signal utile, plus de périodes « morcelées » pourront être nécessaires pour reconstituer, selon le principe décrit en relation à la figure 3, une période utile de passage de dent de la roue phonique.

A une étape 110, les échantillons $T_1,...,T_n$ sont ensuite triés dans l'ordre du plus ancien échantillon au plus récent. Cette étape 110 permet, aux étapes ultérieures, de réaliser des sommes de périodes consécutives dans le temps. On suppose ici, pour plus de commodité, que les échantillons triés conservent leur ordre de $T_1$ à $T_n$ après le tri. En sortie d'étape 110, le système applicatif dispose donc d'un vecteur constitué de n échantillons de périodes consécutives.

A la suite de l'étape 110, dans le présent mode de réalisation, on distingue deux cas de figure, en fonction de la valeur d'un signal binaire d'initialisation qui indique si la mesure de période est à un état initialisé ou non. En effet, comme il sera décrit ci-après, aux étapes suivantes de reconstitution de période consolidée à partir de l'étape 120, une valeur de période consolidée obtenue à un pas de calcul précédent est prise en entrée. Ces étapes nécessitent donc qu'au moins une valeur de période consolidée jugée satisfaisante ait été acquise.

Dans le présent mode de réalisation, on effectue un test sur les échantillons de période $T_1,...,T_n$ triés dans le buffer B. En alternative, on pourrait également effectuer un test pour l'initialisation sur des échantillons de période non triés. On teste si un certain nombre d'échantillons parmi les échantillons $T_1,...,T_n$ (par exemple, dix échantillons), ou en alternative tous les échantillons, sont suffisamment cohérents entre eux, c'est-à-dire si leurs valeurs sont faiblement dispersées par rapport à un pourcentage seuil de dispersion D prédéterminé.

Par exemple, si le test d'initialisation nécessite que trois échantillons de période soient peu dispersés entre eux, et pour une valeur du seuil de dispersion D égale à 5%, on vérifie si l'équation logique

$$100 * \frac{P1-P2}{P1} < 5\% \quad \text{ET} \quad 100 * \frac{P2-P3}{P2} < 5\%$$ est vérifiée.

En alternative, le test d'initialisation pourrait consister à vérifier qu'un nombre d'échantillons de période parmi $T_1,...,T_n$ compris dans un intervalle de vraisemblance [Pmin,Pmax], où les valeurs $P_{min}$ et $P_{max}$ sont par exemple calculées à l'aide d'un modèle théorique dépendant des conditions opérationnelles du moteur, dépasse un seuil prédéterminé $A_3$.

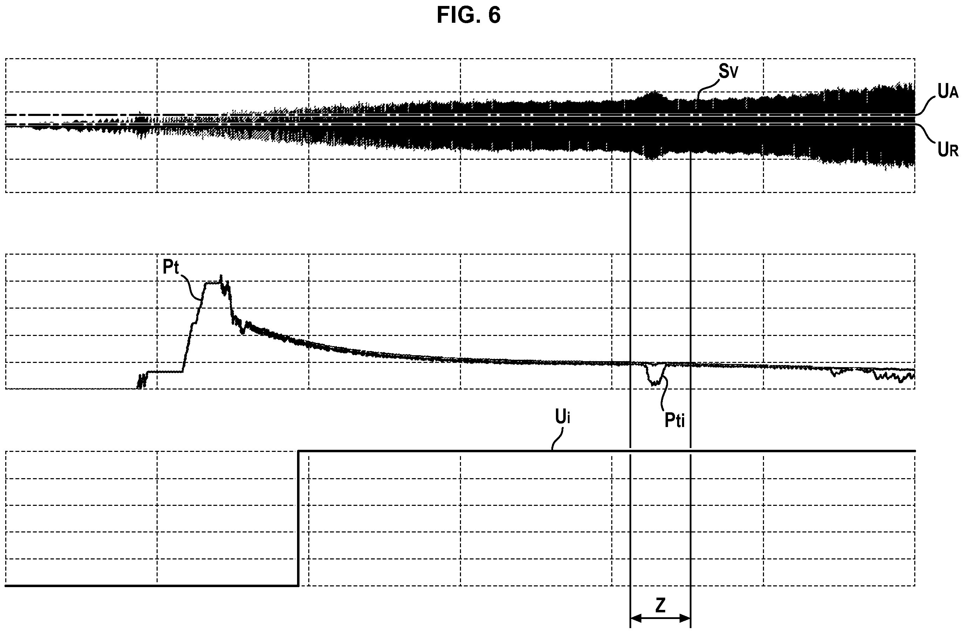

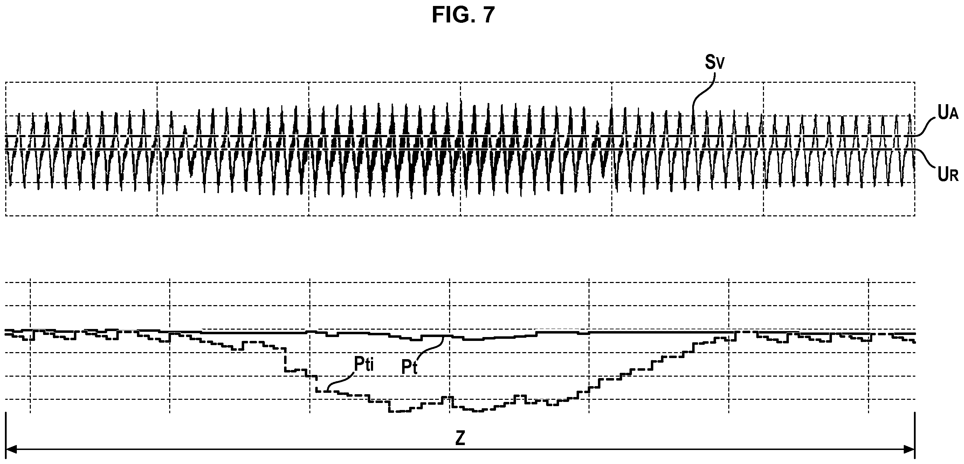

Tant que le test d'initialisation ne donne pas un résultat positif pour une itération du procédé 10, la valeur du signal binaire d'initialisation reste à zéro, et la mesure est considérée comme non initialisée. Pendant cette phase d'initialisation où la mesure n'est pas encore initialisée, à la place de déterminer une période consolidée Pt à partir d'une période consolidée antérieure $P_{t-1}$, on calcule Pt par un modèle numérique théorique $P_{th}$, à une étape 500D (modalité D de l'étape 500 de détermination de période Pt). Le modèle numérique théorique $P_{th}$ peut correspondre à un modèle théorique de valeur de régime N1, en fonction de paramètres thermodynamiques du moteur, comme la valeur du régime de corps haute pression, la pression atmosphérique, le calage stator du compresseur. Des résultats obtenus pendant une phase d'initialisation de la mesure de période sont décrits ci-après, en relation aux figures 6 et 7.

Si le test d'initialisation s'avère négatif pendant une période trop longue (relativement à une durée prédéterminée), ce qui sous-entend que le signal est fortement bruité, il est possible de faire passer la valeur du signal binaire d'initialisation à 1 et d'initialiser l'algorithme à l'aide d'une valeur de période consolidée Pt issue du modèle numérique théorique donnant la période $P_{th}$. Il est possible de tenir compte, dans l'établissement de l'intervalle de vraisemblance [$P_{t\,min}$, $P_{t\,max}$] aux itérations suivantes après initialisation, d'une marge d'erreur dans la détermination de cette période théorique, due à une incertitude de mesure du régime moteur utilisé dans le modèle théorique.

Si le test d'initialisation donne un résultat positif, le signal binaire d'initialisation est incrémenté à la valeur 1. Le signal d'initialisation reste alors égal à 1 jusqu'à la fin de la mesure de période de passage de dents de roue phonique, et lors des itérations suivantes du procédé, on exploite donc des valeurs de période consolidée obtenues précédemment. Lors de l'itération du procédé où la valeur du signal binaire d'initialisation est incrémentée à 1, on peut calculer une période consolidée initiale $P_{t0}$ à partir des échantillons déterminés cohérents entre eux. Par exemple, la valeur $P_{t0}$ peut être prise égale à la moyenne arithmétique des échantillons de période jugés cohérents entre eux. L'étape 120 suivante peut alors être mise en œuvre à l'itération suivante, en considérant comme valeur de période consolidée antérieure la valeur $P_{t0}$.

A condition que la mesure de période soit initialisée, après l'étape 110 de tri des échantillons, le procédé 10 se poursuit par une étape 120 de calcul d'une borne inférieure et d'une borne supérieure de période utile. En alternative, lorsque la mesure de période est initialisée, l'étape 120 peut être mise en œuvre avant l'étape 110, ou en parallèle de l'étape 110. L'étape 120 consiste à établir un intervalle de vraisemblance qui permettra ensuite de déterminer, parmi les échantillons triés $T_1,...,T_n$, ceux qui peuvent correspondre à des périodes « complètes », autrement dit des échantillons de période valides pour la mesure de fréquence de passage de dents de roue phonique.

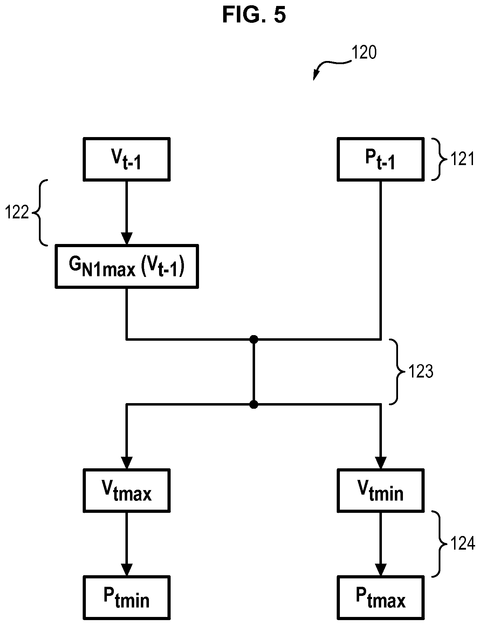

Le détail de l'algorithme 120 de calcul de l'intervalle de vraisemblance pour la t-ième période Pt de passage de dents de roue phonique, délimité par une borne inférieure $P_{t\,min}$ et une borne supérieure $P_{t\,max}$, est décrit en relation à la **figure 5**.

A une étape 121 sont acquises les valeurs $P_{t-1}$ et $V_{t-1}$, respectivement de la (t-1)-ième valeur de période de passage de dents de roue phonique déterminée précédemment à l'aide de l'algorithme 100, et de la (t-1)-ième valeur de vitesse de rotation correspondante. Les périodes sont par exemple exprimées en millisecondes, et les vitesses de rotation sont par exemple exprimées en rotations par minute (rpm).

Ensuite, à l'étape 122, et à l'aide d'une loi prédéterminée de gradient maximal possible de vitesse de rotation de la roue phonique (gradient maximal de régime N1), est calculé le gradient maximal de vitesse de rotation pour la période Pt. La loi $G_{N1max}$ peut être issue d'essais moteurs ou de calculs préalables. Elle est ici exprimée en fonction de la vitesse de rotation de l'arbre, mais peut dépendre d'autres paramètres liés aux conditions opérationnelles du moteur. Le gradient de vitesse de rotation peut être exprimé en rpm par seconde.

A l'étape 123, la valeur $G_{N1max}(V_{t-1})$ obtenue est utilisée pour obtenir la variation maximale de vitesse de rotation sur la période Pt. On multiplie ici la valeur de gradient maximal $G_{N1max}(V_{t-1})$ par la période $P_{t-1}$ pour obtenir une estimation de cette variation maximale. Cette valeur de variation maximale est ici en valeur absolue, et peut conduire soit à une accélération soit à une décélération de la rotation de la roue phonique. On calcule ainsi la vitesse $V_{t\,max}$ obtenue en ajoutant à $V_{t-1}$ cette variation maximale, et la vitesse $V_{t\,min}$ obtenue en retranchant à $V_{t-1}$ cette variation maximale.

En alternative, la variation maximale allant dans le sens d'une décélération (minimale en valeur relative) de la vitesse de rotation pourrait ne pas être égale à l'opposé de la variation maximale allant dans le sens d'une accélération.

Enfin, à une étape 124, on déduit de ces valeurs de vitesse maximale Vtmax et minimale $V_{t\,min}$ respectivement les valeurs de période minimale $P_{t\,min}$ et de période maximale $P_{t\,max}$. On obtient d'abord, à partir de $V_{t\,max}$ et $V_{t\,min}$, des valeurs de fréquences maximale et minimale respectivement $f_{t\,max}$ et $f_{t\,min}$ de passage de dent de la roue phonique. Par exemple, si la vitesse est exprimée en rpm, on effectue d'abord une division par 60 (pour obtenir des valeurs de vitesse en rotations par seconde), puis on multiplie les valeurs obtenues après division par le nombre de dents de la roue phonique, pour obtenir les fréquences maximale et minimale de passage de dents. Enfin, pour obtenir les périodes $P_{t\,min}$ et $P_{t\,max}$ correspondantes, on considère respectivement l'inverse des fréquences $f_{t\,max}$ et $f_{t\,min}$, en appliquant de manière connue une saturation pour éviter les divisions par 0.

Revenant ici au schéma de la figure 4, à une étape 200, on détermine, parmi $T_1,...,T_n$ et à partir de l'intervalle de vraisemblance délimité par les périodes $P_{t\,min}$ et $Pt_{\,max}$, les échantillons valides $T_1,...,T_{k1}$ dont la valeur est comprise entre les périodes $P_{t\,min}$ et $P_{t\,max}$, ainsi que le nombre $k_1$ de ces échantillons valides. On note ici $V_1$ l'ensemble des échantillons de période du buffer B désignés valides à ce stade.

On considère alors une première valeur de seuil $A_1$ de nombre d'échantillons valides. On compare le nombre $k_1$ d'échantillons valides (non nécessairement consécutifs) à la valeur seuil $A_1$.

Si $k_1$ est supérieur ou égal à $A_1$, il est estimé que l'on dispose de suffisamment d'échantillons valides acquis pour obtenir, en moyennant (par une moyenne ici arithmétique, qui pourrait en alternative être géométrique) les échantillons valides, une t-ième période Pt pour le passage des dents de la roue phonique qui ait un sens pour la mesure du régime N1. Autrement dit, parmi les échantillons contenus dans le buffer B, on dispose de suffisamment d'échantillons dont on estime qu'ils ne proviennent pas de commutations parasites et correspondent à des périodes « complètes ». Ainsi si $k_1$ est supérieur ou égal à $A_1$, le système applicatif du calculateur électronique de régulation du moteur détermine à une étape 500A (modalité A de l'étape 500) que Pt est égal à la moyenne arithmétique des $k_1$ échantillons valides de période contenus dans B.

On choisit une valeur du seuil $A_1$ qui soit suffisante pour obtenir des périodes consolidées ayant du sens pour la mesure de fréquence, mais pas trop élevée pour ne pas complexifier de manière exagérée les calculs et ne pas encombrer la mémoire du système applicatif. Par exemple, il est intéressant de considérer un seuil $A_1$ étant égal au nombre de dents de la roue phonique ou à un multiple de ce nombre de dents : ainsi, si des dents présentent par rapport à d'autres dents des irrégularités de géométrie, qui justifieraient des inégalités de période dans le signal utile (non liées à la présence de bruit parasite), l'algorithme réduirait l'influence de ces irrégularités en effectuant la moyenne sur un nombre de périodes qui couvre le périmètre entier de la roue phonique.

Si en revanche, $k_1$ est inférieur à $A_1$, on passe à l'étape suivante 300 de calcul de sommes d'échantillons.

Comme vu précédemment en relation à la figure 3, un principe de l'addition de plusieurs échantillons non valides de période est de retrouver des sommes d'échantillons correspondant à des périodes « complètes » du signal utile, en se départant de l'influence de commutations parasites dues au bruit. En pratique, l'algorithme recherche des sommes d'échantillons consécutifs dont la valeur somme est comprise dans l'intervalle de vraisemblance déterminé précédemment à l'étape 120, à savoir entre $P_{t\,min}$ et $Pt_{\,max}$.

Ainsi, dans le mode de réalisation ici décrit, l'algorithme calcule, pour un indice i variant de 1 à n-1 (n étant le nombre d'éléments du buffer B) et pour un indice j strictement supérieur à i et variant de i+1 à n, la somme notée $S_{ij}$ des échantillons de période du buffer B à partir de $T_i$ jusqu'à $T_j$, étant rappelé que les échantillons $T_1,...,T_n$ ont été triés par ordre de date à l'étape 110. En d'autres termes, on réalise ici toutes les sommes possibles d'échantillons consécutifs du buffer B.

Ensuite, à une étape 400, on détermine, parmi $S_{12},...,S_{1n},S_{23},...,S_{(n-1)n}$ et à partir de l'intervalle de vraisemblance délimité par les périodes $P_{t\,min}$ et $Pt_{\,max}$, les sommes valides d'échantillons $S_1,...,S_{k2}$ dont la valeur est comprise entre les périodes $P_{t\,min}$ et $P_{t\,max}$, ainsi que le nombre $k_2$ de ces sommes valides d'échantillons. On note ici $V_2$ l'ensemble des sommes d'échantillons considérées valides. En alternative, on pourrait considérer des valeurs de bornes inférieure et supérieure de l'intervalle de vraisemblance qui seraient différentes des valeurs déterminées à l'étape 200, ou encore en alternative, il est possible d'appliquer un autre critère que l'appartenance à l'intervalle [Ptmin, Ptmax] pour sélectionner des sommes valides, ou il est possible de ne pas faire de sélection de sommes valides.

De manière similaire à l'étape 400, on distingue deux cas selon la relation d'ordre entre le nombre $k_2$ et un deuxième seuil $A_2$ de nombre de sommes de périodes valides. Le seuil $A_2$ peut être pris égal à $A_1$. De préférence, le seuil $A_2$ est pris supérieur à $A_1$, pour que le calcul de la période consolidée Pt par moyenne des sommes valides d'échantillons requière un plus grand nombre de sommes valides. Cela est justifié car le fait d'admettre l'utilisation de sommes d'échantillons (et non plus seulement d'échantillons de période) dans le calcul de la période consolidée diminue la précision de la mesure. Si le nombre $k_2$ de sommes valides d'échantillons est supérieur ou égal au seuil $A_2$, l'algorithme détermine à l'étape 500B que la période consolidée Pt est égale à la moyenne, ici arithmétique, de l'ensemble constitué des $k_1$ échantillons précédemment déterminés valides à l'étape 200, complétés par les $k_2$ sommes valides d'échantillons repérées à l'étape 400.

Ce dernier mode de calcul de période consolidée est très avantageux, car contrairement au mode de calcul de l'étape 500A, il ne requiert pas de disposer d'un nombre prédéterminé d'échantillons valides pris seuls dans le buffer B. Autrement dit, le calcul de l'étape 500B peut être réalisé même si l'ensemble des échantillons de période acquis dans le buffer B, ou un grand nombre d'entre eux, sont « morcelés » et résultent de commutations parasites. L'algorithme reconstitue, à partir de périodes incohérentes prises seules (au vu de la loi de gradient de régime utilisée), une période utile pour le calcul de régime, ce qui permet non seulement une meilleure précision de la mesure en sortie de filtrage, mais permet aussi à l'algorithme de fonctionner même si aucune période acquise sur le signal crénelé $S_c$ n'est « complète ».

Une condition pour le calcul de période consolidée de l'étape 500B est cependant de réussir, à partir des échantillons non valides contenus dans le buffer B, à reconstituer des sommes d'échantillons de période consécutifs qui soient déterminées valides, puisque comprises dans l'intervalle de vraisemblance entre $P_{t\,min}$ et $P_{t\,max}$. De préférence, l'algorithme de détermination de période consolidée prévoit, si cette condition n'est pas réalisée (c'est-à-dire si les échantillons de période acquis dans le buffer B sont trop bruités), d'attribuer tout de même une valeur Pt, de manière à pouvoir poursuivre la mise en œuvre du procédé 10 sur des itérations suivantes en disposant d'une valeur de période consolidée Pt. Ici, si on ne dispose pas de suffisamment de sommes valides d'échantillons de période, la période Pt est prise égale à la période consolidée $P_{t-1}$ déterminée à l'itération précédente, à une étape 500C. Pour rappel, pendant la phase d'initialisation où l'on ne dispose pas d'une première valeur de période consolidée Pt satisfaisante, on peut appliquer un modèle théorique dépendant des conditions opérationnelles du moteur pour obtenir Pt.

Les résultats obtenus par l'application du procédé 10 sur un signal de tension Sv acquis aux bornes d'un capteur à roue phonique sont illustrés, à partir d'une phase d'initialisation de la mesure, sur les **figures 6 et 7**. Ces figures représentent sur un premier axe la tension Sv au fil du temps, en repérant les seuils de redémarrage $U_R$ et de réarmement $U_A$ du trigger de Schmidt réalisant le crénelage du signal $S_V$. Sur un deuxième axe, sont représentées en superposition la période Pt consolidée obtenue par l'application du procédé 10, sur la même échelle de temps, et une autre valeur de période Pti qui serait obtenue à partir du même signal $S_V$ en lui appliquant un algorithme de moyennage simple d'échantillons de périodes. Enfin, le troisième axe illustre sur la même échelle de temps la valeur du signal binaire d'initialisation $U_I$, calculé selon les modalités décrites ci-avant.

La valeur Pti correspond à une valeur de période obtenue sans distinguer échantillons valides et échantillons non valides (au regard du critère explicité en relation à l'étape 200), et sans réaliser des sommes d'échantillons de période consécutifs mesurés sur un signal créneau obtenu à partir du signal Sv. L'algorithme de calcul de période Pti (non décrit dans le détail ici) comprend le même critère d'initialisation que celui qui intervient dans le test d'initialisation permettant de gérer le signal $U_I$ : le calcul de Pti peut être initialisé si un certain nombre d'échantillons de période ne sont pas dispersés entre eux au-delà du seuil de dispersion D. Ainsi, sur la figure 6, les abscisses de temps correspondant à une valeur 0 du signal $U_I$ (phase d'initialisation) ne sont pas associées à une valeur de Pti. En revanche, pendant la phase d'initialisation, le procédé 10 fournit des valeurs de Pt à l'aide du modèle théorique $P_{th}$ décrit ci-avant, ces valeurs étant visibles sur le deuxième axe de la figure 6.

Une fois la mesure correctement initialisée et le signal $U_I$ incrémenté à la valeur 1, la valeur Pti est obtenue en faisant une moyenne arithmétique de tous les échantillons de période contenus dans le buffer B. La valeur Pt, elle, est obtenue selon le procédé 10, donc en ne moyennant que les échantillons valides si l'algorithme en détermine un nombre supérieur au premier seuil A1, et en réalisant dans le cas contraire des sommes d'échantillons consécutifs selon les modalités décrites ci-avant. Sur une majeure partie de la plage de temps illustrée en figure 6, par exemple la plage de temps où la mesure est initialisée et qui précède la plage référencée Z, tous les échantillons du buffer B sont déterminés comme valides à l'étape 200 du procédé 10, et la période Pt correspond à la moyenne arithmétique de tous ces échantillons. Sur cette plage de temps, la période Pt est donc égale à la période Pti.

En revanche, sur la plage Z, on observe sur le premier axe de la figure 6 que l'amplitude maximale du signal Sv est plus importante que pour les valeurs du signal Sv obtenues antérieurement. Cela est ici indicatif d'un bruit parasite de type alternatif, qui vient se surajouter au signal utile lors de la mesure de la tension aux bornes du capteur à roue phonique. Sur cette plage, de nombreux échantillons de période parmi les échantillons acquis et enregistrés dans le buffer circulaire B sont « morcelés » et correspondent à des commutations parasites du signal créneau associé au signal Sv. La figure 7 donne à voir, sur une échelle de temps moindre, les courbes des premier et deuxième axes de la figure 6, sur la plage de temps Z. La valeur de Pti est toujours obtenue en faisant la moyenne arithmétique du même nombre d'échantillons de période, bien que beaucoup de ces échantillons soient « morcelés » et correspondent à des durées bien moindres à des périodes de signal utile. Ainsi, lorsque le signal Sv est très bruité, la valeur de Pti peut atteindre $1{,}0.10^{-5}$ s, alors qu'elle est de l'ordre de $2{,}0.10^{-4}$ s sur les plages de temps de mesure où le signal Sv est peu ou pas bruité. En revanche, grâce à l'algorithme de calcul de période consolidée qui retrouve des valeurs cohérentes de période de signal utile à partir des périodes « morcelées » enregistrées dans le buffer circulaire B, la valeur de Pt n'est presque pas diminuée sur la plage Z, ne descendant pas en-deçà de $1{,}7.10^{-4}$ s. La mesure de période Pt n'est donc presque pas affectée par la présence d'un bruit alternatif parasite sur la plage Z.

Le procédé 10 décrit ci-avant permet donc, sans devoir repérer parmi les commutations du signal créneau celles qui correspondent à un bruit parasite et celles qui correspondent au signal utile de mesure de régime N1, de réduire fortement l'influence d'un bruit parasite de type alternatif sur la mesure de période de passage de dents de roue phonique. La mesure de vitesse de rotation de la roue phonique, et donc la mesure de régime N1, s'en trouvent fiabilisées. Cette solution, d'implémentation simple dans le système applicatif d'une interface numérique de moteur, est beaucoup plus efficace qu'un simple moyennage d'un nombre constant d'échantillons de période, comme vu ci-avant. Par ailleurs, cette solution est avantageuse par rapport aux solutions connues consistant à appliquer un filtrage de type passe-bas, car elle n'affecte pas la précision et la sensibilité de mesure, et ne provoque pas un déphasage du signal acquis aux bornes du capteur à roue phonique.

## Revendications

**1.** Procédé de mesure de vitesse de rotation d'un arbre d'un moteur d'aéronef à partir d'un signal créneau ($S_C$), ledit signal créneau étant obtenu à partir d'un signal alternatif ($S_V$) de détection de vitesse de rotation acquis aux bornes d'un capteur de vitesse comportant une roue phonique entraînée en rotation par l'arbre,

ledit signal créneau ($S_C$) commutant vers un niveau bas de tension ($U_1$), respectivement vers un niveau haut de tension ($U_2$), en correspondance avec le passage de la tension du signal alternatif ($S_V$) en-dessous d'un seuil de redémarrage ($U_R$), respectivement au-dessus d'un seuil de réarmement ($U_A$),

le procédé comprenant les étapes suivantes :

- enregistrement, dans une mémoire de type buffer circulaire (B), d'une pluralité d'échantillons ($T_1,...,T_n$) de période de signal créneau ($S_C$),
- comparaison de chacun desdits échantillons à une borne inférieure de période ($P_{t\,min}$) et une borne supérieure de période ($P_{t\,max}$), pour déterminer des échantillons dits valides dont la valeur est comprise entre ces deux bornes;
- si le nombre d'échantillons valides déterminés est supérieur à un premier seuil ($A_1$), détermination à partir desdits échantillons valides d'une période utile ($P_t$) du signal créneau ($S_C$),

le procédé étant **caractérisé en ce qu'**au moins à la condition que le nombre d'échantillons valides soit inférieur au premier seuil ($A_1$), la détermination de la période utile ($P_t$) du signal créneau ($S_C$) met en œuvre les étapes suivantes :

- calcul d'une pluralité de sommes d'au moins deux échantillons consécutifs ($S_{12},...,S_{1n},S_{23},...,S_{(n-1)n}$),
- détermination, parmi ladite pluralité de sommes, de sommes valides d'échantillons consécutifs, lesdites sommes valides étant comprises entre la borne inférieure de période ($P_{t\,min}$) et la borne supérieure de période ($P_{t\,max}$),
- calcul de la moyenne d'un ensemble comprenant des échantillons valides de période et des sommes valides d'échantillons, la période utile ($P_t$) du signal créneau étant prise égale à ladite moyenne.

**2.** Procédé de mesure de vitesse selon la revendication 1, comprenant une étape supplémentaire de détermination, parmi la pluralité de sommes d'échantillons calculées, de sommes valides d'échantillons qui sont comprises entre les bornes inférieure et supérieure de période ($P_{t\,min}$, $P_{t\,max}$), le calcul de la période utile ($P_t$) du signal créneau étant réalisé en calculant la moyenne de l'ensemble constitué des échantillons valides et des sommes déterminées valides d'échantillons.

**3.** Procédé de mesure de vitesse selon l'une des revendications 1 ou 2, dans lequel si la somme du nombre d'échantillons valides et du nombre de sommes valides d'échantillons est inférieure à un deuxième seuil ($A_2$), la période utile ($P_t$) du signal créneau est prise égale à une période utile du signal créneau ($P_{t-1}$) obtenue lors d'une itération précédente du procédé.

**4.** Procédé de mesure de vitesse selon l'une des revendications 1 à 3, dans lequel les bornes inférieure et supérieure ($P_{t\,min}$, $P_{t\,max}$) de période sont calculées à partir d'une valeur de période consolidée, et d'une valeur de variation maximale de période.

**5.** Procédé de mesure selon la revendication 4, dans lequel la période consolidée est prise égale à une période utile de signal créneau obtenue à un instant antérieur ($P_{t-1}$).

**6.** Procédé de mesure selon l'une des revendications 4 ou 5, dans lequel la valeur de variation maximale de période est obtenue à l'aide d'une loi de gradient maximal de vitesse de rotation ($G_{N1max}$), où le gradient maximal à un instant donné est fonction de la vitesse de rotation.

**7.** Procédé de mesure selon l'une des revendications 1 à 6, dans lequel durant une phase d'initialisation de la mesure, phase pendant laquelle le nombre d'échantillons valides de période ne dépasse pas un troisième seuil ($A_3$), une période utile du signal créneau est estimée par un modèle numérique théorique de période ($P_{th}$).

**8.** Procédé de mesure selon l'une des revendications 1 à 7, dans lequel durant une phase d'initialisation de la mesure, pendant laquelle les échantillons de période détectés sur le signal créneau ($S_C$) sont dispersés entre eux au-delà d'un seuil prédéterminé ($D$), une période utile du signal créneau est estimée par un modèle numérique théorique de période ($P_{th}$).

**9.** Procédé de mesure selon la revendication 7 ou 8, où la période utile du signal créneau est déterminée pendant la phase d'initialisation par un modèle numérique en fonction de paramètres thermodynamiques du moteur, de préférence pris parmi la valeur du régime de corps haute pression ou la valeur du régime d'un autre élément tournant du moteur, la pression atmosphérique, le calage stator du compresseur.

**10.** Calculateur de moteur d'aéronef configuré pour mettre en œuvre les étapes suivantes, en prenant en entrée un signal créneau ($S_C$) :

enregistrement, dans une mémoire de type buffer circulaire ($B$), d'une pluralité d'échantillons ($T_1,...,T_n$) de période du signal créneau ($S_C$), comparaison de chacun desdits échantillons à une borne inférieure de période ($P_{tmin}$) et une borne supérieure de période ($P_{tmax}$), pour déterminer des échantillons dits valides dont la valeur est comprise entre ces deux bornes, si le nombre d'échantillons valides déterminés est supérieur à un premier seuil ($A_1$), détermination à partir desdits échantillons valides d'une période utile ($P_t$) du signal créneau ($S_C$), et si le nombre d'échantillons valides est inférieur au premier seuil ($A_1$), détermination de la période utile ($P_t$) du signal créneau ($S_C$) comme suit :

- calcul d'une pluralité de sommes d'au moins deux échantillons consécutifs ($S_{12},...,S_{1n},S_{23},...,S_{(n-1)n}$), détermination, parmi ladite pluralité des sommes, de sommes valides d'échantillons consécutifs, lesdites sommes valides étant comprises entre la borne inférieure ($P_{t\,min}$) et la borne supérieure ($P_{t\,max}$) de période,
- calcul de la moyenne d'un ensemble comprenant des échantillons valides de période et des sommes valides d'échantillons, la période utile ($P_t$) du signal créneau étant prise égale à ladite moyenne.

**11.** Produit programme d'ordinateur, destiné à être utilisé dans un système applicatif d'un calculateur de moteur de turbomachine prenant en entée un signal créneau ($Sc$), dont des instructions de code permettent la mise en œuvre d'un procédé selon l'une quelconque des revendications 1 à 9.

**Patentansprüche**

**1.** Verfahren zum Messen der Drehzahl einer Welle eines Flugzeugtriebwerks anhand eines Rechtecksignals ($Sc$), wobei das Rechtecksignal anhand eines alternierenden Drehzahlerfassungssignals ($Sv$) gewonnen wird, das an den Grenzen eines Drehzahlsensors erlangt wird, der ein Tonrad aufweist, das von der Welle in Drehung versetzt wird,

wobei das Rechtecksignal ($Sc$) auf einen niedrigen Spannungspegel ($U_1$) beziehungsweise auf einen hohen Spannungspegel ($U_2$) umschaltet, entsprechend dem Spannungsdurchgang des alternierenden Signals ($Sv$) unterhalb eines Neustartschwellenwerts ($U_R$) beziehungsweise oberhalb eines Rücksetzschwellenwerts ($U_A$), wobei das Verfahren die folgenden Schritte umfasst:

- Aufzeichnung einer Vielzahl von Abtastperioden ($T_1,..., T_n$) eines Rechtecksignals ($Sc$) in einem Speicher vom Typ Ringpuffer ($B$),
- Vergleich jeder der Abtastwerte an einer unteren Grenze der Periode ($P_{t\,min}$) und einer oberen Grenze der Periode ($P_{t\,max}$), um sogenannte gültige Abtastwerte zu ermitteln, deren Wert zwischen diesen beiden Grenzen liegt;

- wenn die Anzahl der ermittelten gültigen Abtastwerte größer ist als ein erster Schwellenwert ($A_1$), Ermittlung einer Nutzperiode ($P_t$) des Rechtecksignals (Sc) anhand der gültigen Abtastwerte,

wobei das Verfahren **dadurch gekennzeichnet ist, dass**, zumindest unter der Bedingung, dass die Anzahl gültiger Abtastwerte kleiner ist als der erste Schwellenwert ($A_1$), die Ermittlung der Nutzperiode ($P_t$) des Rechtecksignals (Sc) die folgenden Schritte implementiert:

- Berechnung einer Vielzahl von Summen von mindestens zwei aufeinanderfolgenden Abtastwerten ($S_{12},...,S_{1n},S_{23},...,S_{(n-1)n}$),
- Ermittlung gültiger Summen aufeinanderfolgender Abtastwerte aus der Vielzahl von Summen, wobei die gültigen Summen zwischen der unteren Grenze der Periode ($P_{t\,min}$) und der oberen Grenze der Periode ($P_{t\,max}$) liegen,
- Berechnung des Mittelwerts eines Satzes, der gültige Abtastperioden und gültige Summen von Abtastwerten umfasst, wobei die Nutzperiode ($P_t$) des Rechtecksignals gleich dem Mittelwert genommen wird.

2. Verfahren zum Messen der Drehzahl nach Anspruch 1, umfassend einen zusätzlichen Schritt der Ermittlung, aus der Vielzahl von Summen von berechneten Abtastwerten, gültiger Summen von Abtastwerten, die zwischen der unteren und der oberen Grenze der Periode ($P_{t\,min}$, $P_{t\,max}$) liegen, wobei die Berechnung der Nutzperiode ($P_t$) des Rechtecksignals durch Berechnen des Mittelwerts des Satzes, der aus gültigen Abtastwerten und ermittelten gültigen Summen von Abtastwerten besteht, realisiert wird.

3. Verfahren zum Messen der Drehzahl nach einem der Ansprüche 1 oder 2, wobei, wenn die Summe der Anzahl gültiger Abtastwerte und der Anzahl gültiger Summen von Abtastwerten kleiner ist als ein zweiter Schwellenwert ($A_2$), die Nutzperiode ($P_t$) des Rechtecksignals gleich einer Nutzperiode des Rechtecksignals ($P_{t-1}$) genommen wird, die anlässlich einer vorherigen Iteration des Verfahrens gewonnen wurde.

4. Verfahren zum Messen der Drehzahl nach einem der Ansprüche 1 bis 3, wobei die untere und obere Grenze der Periode ($P_{t\,min}$, $P_{t\,max}$) aus einem konsolidierten Wert einer Periode und aus einem Wert maximaler Periodenvariation berechnet werden.

5. Messverfahren nach Anspruch 4, wobei die konsolidierte Periode gleich einer Nutzperiode des Rechtecksignals genommen wird, die zu einem früheren Zeitpunkt ($P_{t-1}$) gewonnen wurde.

6. Messverfahren nach einem der Ansprüche 4 oder 5, wobei der Wert maximaler Periodenvariation unter Verwendung eines Gesetzes des maximalen Drehzahlgradienten ($G_{N1max}$) gewonnen wird, wobei der maximale Gradient zu einem gegebenen Zeitpunkt Funktion der Drehzahl ist.

7. Messverfahren nach einem der Ansprüche 1 bis 6, wobei in einer Initialisierungsphase der Messung, eine Phase während der die Anzahl der gültigen Abtastperioden einen dritten Schwellenwert ($A_3$) nicht überschreitet, eine Nutzperiode des Rechtecksignals durch ein theoretisches digitales Periodenmodell ($P_{th}$) geschätzt wird.

8. Messverfahren nach einem der Ansprüche 1 bis 7, wobei in einer Initialisierungsphase der Messung, während der die auf dem Rechtecksignal (Sc) erfassten Abtastperioden über einen vorbestimmten Schwellenwert (D) hinaus untereinander verteilt werden, eine Nutzperiode des Rechtecksignals durch ein theoretisches digitales Periodenmodell ($P_{th}$) geschätzt wird.

9. Messverfahren nach Anspruch 7 oder 8, wobei die Nutzperiode des Rechtecksignals während der Initialisierungsphase durch ein digitales Modell in Abhängigkeit von thermodynamischen Parametern des Triebwerks ermittelt wird, vorzugsweise genommen aus dem Betriebswert des Hochdruckkörpers oder dem Betriebswert eines anderen rotierenden Elements des Triebwerks, des Atmosphärendrucks, der Statoreinstellung des Kompressors.

10. Computer eines Flugzeugtriebwerks, der konfiguriert ist, um die folgenden Schritte zu implementieren, wobei ein Rechtecksignal (Sc) als Eingabe verwendet wird:

Aufzeichnung einer Vielzahl von Abtastperioden ($T_1,...,T_n$) eines Rechtecksignals (Sc) in einem Speicher vom Typ Ringpuffer (B),
Vergleich jeder der Abtastwerte an einer unteren Grenze der Periode ($P_{t\,min}$) und einer oberen Grenze der Periode ($P_{t\,max}$), um sogenannte gültige Abtastwerte zu ermitteln, deren Wert zwischen diesen beiden Grenzen liegt,
wenn die Anzahl der ermittelten gültigen Abtastwerte größer ist als ein erster Schwellenwert ($A_1$), Ermittlung einer Nutzperiode ($P_t$) des Rechtecksignals (Sc) anhand der gültigen Abtastwerte,
und wenn die Anzahl der gültigen Abtastwerte kleiner ist als der erste Schwellenwert ($A_1$), Ermittlung der Nutzperiode ($P_t$) des Rechtecksignals (Sc), wie folgt:

    - Berechnung einer Vielzahl von Summen von mindestens zwei aufeinanderfolgenden Abtastwerten ($S_{12},...,S_{1n},S_{23},...,S_{(n-1)n}$),
    - Ermittlung gültiger Summen aufeinanderfolgender Abtastwerte aus der Vielzahl von Summen, wobei die gültigen Summen zwischen der unteren Grenze ($P_{t\,min}$) und der oberen Grenze der Periode ($P_{t\,max}$) liegen,
    - Berechnung des Mittelwerts eines Satzes, der gültige Abtastperioden und gültige Summen von Abtastwerten umfasst, wobei die Nutzperiode ($P_t$) des Rechtecksignals gleich dem Mittelwert genommen wird.

**11.** Computerprogrammprodukt, das dazu bestimmt ist, in einem Anwendungssystem eines Computers eines Turbomaschinenmotors angewendet zu werden, wobei als Eingabe ein Rechtecksignal (Sc) verwendet wird, dessen Codeanweisungen die Implementierung eines Verfahrens nach einem der Ansprüche 1 bis 9 ermöglichen.

**Claims**

**1.** A method for measuring the rotational speed of a shaft of an aircraft engine from a square wave signal (Sc), said square wave signal being obtained from an alternating rotational speed detection signal (Sv) acquired at the terminals of a speed sensor including a phonic wheel driven in rotation by the shaft,

    said square wave signal (Sc) switching to a low voltage level ($U_1$), respectively to a high voltage level ($U_2$), in correspondence with the passage of the voltage of the alternating signal (Sv) below a restart threshold ($U_R$), respectively above a reset threshold ($U_A$),
    the method comprising the following steps:

        - recording, in a circular buffer type memory (B), a plurality of period samples ($T_1,...,T_n$) of square wave signal ($S_c$),
        - comparing each of said samples with a lower period limit ($P_{t\,min}$) and an upper period limit ($P_{t\,max}$), to determine samples called valid samples whose value is comprised between these two limits;
        - if the number of determined valid samples is greater than a first threshold ($A_1$), determining from said valid samples a useful period ($P_t$) of the square wave signal ($S_c$).

the method being **characterised in that** at least on condition that the number of valid samples is less than the first threshold ($A_1$), the determination of the useful period ($P_t$) of the square wave signal (Sc) implements the following steps:

    - calculating a plurality of sums of at least two consecutive samples ($S_{12},..., S_{1n}, S_{23},..., S_{(n-1)n}$),
    - determining, among said plurality of sums, valid sums of consecutive samples, said valid sums being comprised between the lower period limit ($P_{t\,min}$) and the upper period limit ($P_{t\,max}$)
    - calculating the average of a set comprising valid period samples and valid sample sums, the useful period ($P_t$) of the square wave signal being taken equal to said average.

**2.** The speed measurement method according to claim 1, comprising an additional step of determining, among the plurality of calculated sample sums, valid sample sums which are comprised between the lower and upper period limits ($P_{t\,min}$, $P_{t\,max}$),
the calculation of the useful period ($P_t$) of the square wave signal being carried out by calculating the average of the set consisting of the valid samples and of the determined valid sample sums.

**3.** The speed measurement method according to one of claims 1 or 2, wherein if the sum of the number of valid samples and the number of valid sample sums is less than a second threshold ($A_2$), the useful period ($P_t$) of the square wave signal is taken equal to a useful period of the square wave signal ($P_{t-1}$) obtained during a previous iteration of the method.

**4.** The speed measurement method according to one of claims 1 to 3, wherein the lower and upper period limits ($P_{t\,min}$, $P_{t\,max}$) are calculated from a consolidated period value, and from a maximum period variation value.

**5.** The measurement method according to claim 4, wherein the consolidated period is taken equal to a useful period of the square wave signal obtained at an earlier time ($P_{t-1}$).

**6.** The speed measurement method according to one of claims 4 or 5, wherein the maximum period variation value is obtained using a maximum rotational speed gradient law ($G_{N1max}$), where the maximum gradient at a given time is a function of the rotational speed.

**7.** The measurement method according to one of claims 1 to 6, wherein during a phase of initialisation of the measurement, a phase during which the number of valid period samples does not exceed a third threshold ($A_3$), a useful period of the square wave signal is estimated by a theoretical digital period model ($P_{th}$).

8. The measurement method according to one of claims 1 to 7, wherein during a phase of initialisation of the measurement, during which the period samples detected on the square wave signal ($Sc$) are dispersed therebetween beyond a predetermined threshold ($D$), a useful period of the square wave signal is estimated by a theoretical digital period model ($P_{th}$).

9. The measurement method according to claim 7 or 8, wherein the useful period of the square wave signal is determined during the initialisation phase by a digital model depending on thermodynamic parameters of the engine, preferably taken from the value of the high pressure body speed or the value of the speed of another rotating element of the engine, the atmospheric pressure, the stator pitch of the compressor.

10. An aircraft engine calculator configured to implement the following steps, by taking a square wave signal ($Sc$) as input:

   recording, in a circular buffer type memory ($B$), a plurality of period samples ($T_1,...,T_n$) of the square wave signal ($S_c$),
   comparing each of said samples with a lower period limit ($P_{tmin}$) and an upper period limit ($P_{tmax}$), to determine samples called valid samples whose value is comprised between these two limits;
   if the number of determined valid samples is greater than a first threshold ($A_1$), determining from said valid samples of a useful period ($P_t$) of the square wave signal ($Sc$) .
   and if the number of valid samples is less than the first threshold ($A_1$), determining the useful period ($P_t$) of the square wave signal ($S_c$) as follows:

   - calculating a plurality of sums of at least two consecutive samples ($S_{12},..., S_{1n}, S_{23},..., S_{(n-1)n}$),
   - determining, among said plurality of sums, valid sums of consecutive samples, said valid sums being comprised between the lower period limit ($P_{t\,min}$) and the upper period limit ($P_{t\,max}$)
   - calculating the average of a set comprising valid period samples and valid sample sums, the useful period ($P_t$) of the square wave signal being taken equal to said average.

11. A computer program product, intended to be used in an application system of a turbomachine engine calculator taking a square wave signal ($Sc$) as input, of which code instructions allow the implementation of a method according to any one of claims 1 to 9.

# FIG. 1

EP 3 639 041 B1

# FIG. 2

**FIG. 3**

## FIG. 4

$S_C$

10

**100** Acquisition échantillons

**110** Tri échantillons

$P_{t-1}$     **120**     $V_{t-1}$

**500D** Détermination période théorique
$P_t = P_{th}$

← **NON** — Initialisation OK ? — **OUI** →

Calcul bornes période

$P_{tmin}$
$P_{tmax}$

**200** Détermination échantillons valides

$K_1 \geq A_1$ ?

**NON**

**OUI** →     $V_1 = \{T_1, ..., T_{K1}\}$
card $V_1 = K_1$

**500A** Détermination période utile

$$P_t = \frac{\displaystyle\sum_{i=1}^{K_1} Ti}{K_1}$$

**360** Calcul sommes échantillons

$S_{12}, ..., S_{1n}, S_{23}, ..., S_{(n-1)n}$

**400** Détermination sommes valides

$K_2 \geq A_2$ ?

**500C** Détermination période utile
$P_t = P_{t-1}$

**NON** ←     $V_2 = \{S_1, ..., S_{K2}\}$
card $V_2 = K_2$

**OUI** →

**500B** Détermination période utile

$$P_t = \frac{\displaystyle\sum_{i=1}^{K_1} Ti + \sum_{i=1}^{K_2} Si}{K_1 + K_2}$$

17

# FIG. 5

120

```
┌─────────┐                    ┌─────────┐
│  V_{t-1} │                    │  P_{t-1} │  } 121
└─────────┘                    └─────────┘
     │                              │
122{ │                              │
     ▼                              │
┌──────────────────┐                │
│ G_{N1max} (V_{t-1}) │              │
└──────────────────┘                │
     │                              │
     └──────────────●───────────────┘
                    │                  } 123
     ┌──────────────●
     │                              │
     ▼                              ▼
┌─────────┐                    ┌─────────┐
│ V_{tmax} │                    │ V_{tmin} │
└─────────┘                    └─────────┘
     │                              │     } 124
     ▼                              ▼
┌─────────┐                    ┌─────────┐
│ P_{tmin} │                    │ P_{tmax} │
└─────────┘                    └─────────┘
```

# FIG. 6

EP 3 639 041 B1

# FIG. 7

EP 3 639 041 B1

**EP 3 639 041 B1**

## RÉFÉRENCES CITÉES DANS LA DESCRIPTION

### Documents brevets cités dans la description

- WO 2014207369 A